# EUROPEAN PATENT SPECIFICATION

(11) **EP 3 069 083 B1**
(45) Date of publication and mention of the grant of the patent: **30.01.2019**
(21) Application number: 14795978.7
(22) Date of filing: 27.10.2014
(51) Int. Cl.: F23R 3/34, F02C 7/228, F02C 9/28, F02C 9/34, F23N 5/18

(54) **INTELLIGENT CONTROL METHOD WITH PREDICTIVE EMISSIONS MONITORING ABILITY**
INTELLIGENTES STEUERUNGSVERFAHREN MIT PRÄDIKTIVER EMISSIONSÜBERWACHUNGSFÄHIGKEIT FÜR EINE GASTURBINENVERBRENNUNGSKAMMER
PROCÉDÉ DE COMMANDE INTELLIGENT AVEC CAPACITÉ DE SURVEILLANCE PRÉDICTIVE DES ÉMISSIONS POUR UNE CHAMBRE DE COMBUSTION DE TURBINE À GAZ

(30) Priority: 15.11.2013 EP 13193045
(43) Date of publication of application: 21.09.2016
(73) Proprietor: Siemens Aktiengesellschaft, 80333 München (DE)
(72) Inventor: BRICKWOOD, Gavin, Lincoln LN2 1RN (GB); BULAT, Ghenadie, Lincoln LN6 8BD (GB)
(74) Representative: Maier, Daniel Oliver
(86) International application number: PCT/EP2014/072973
(87) International publication number: WO 2015/071079

(56) References cited:
- EP-A1- 2 442 031
- EP-A2- 0 765 998
- EP-A2- 1 953 365
- WO-A1-2004/109076
- US-A1- 2004 011 050
- US-A1- 2004 216 462
- US-A1- 2012 036 863

## Description

### Field of invention

The present invention relates to a combustion system and to a method for predicting a pollutant concentration of a combustion system for a gas turbine engine.

### Art Background

In a gas turbine engine it is an aim to identify an optimum fuel split ratio between a pilot fuel and a main fuel which are injected into a combustion chamber, so that the best gas turbine engine operation may be achieved. In particular, high metal temperatures and high dynamics in the combustion chamber are to be avoided, whilst increasing engine reliability with the lowest pollutant production, such as NOx, is desired. For example, a low NOx mix emissions may be achieved based on a use of lean main fuel and a huge experience of a known combustion system.

However, there is a demand for the ability to predict pollutant emissions for regulatory purposes. Today, predictive emissions monitoring systems are used which predict a pollutant emission based on operational parameters and a specific gas turbine engine signature which is used in the field. In particular, the NOx and CO emissions can be predicted based on a mapping of the engine firing temperature and then corrected by operational constraints. The engine firing temperature control method implicitly considers the engine operational parameters and then determines the corresponding NOx and CO values. Corrections for operational constraints are completed by an offset, wherein the offset is predetermined e.g. in laboratory tests.

WO 2007/082608 discloses a combustion apparatus including an incoming fuel supply line, which supplies fuel in a plurality of fuel-supply lines to one or more burners. A burner comprises a combustion volume. A temperature sensor is located in the apparatus so as to yield temperature information relating to a component part of the apparatus, which is to be prevented from overheating. The apparatus also includes a control arrangement, which detects the temperature-sensor output and, depending on that output, varies the fuel supplies to one or more of the burners in such a way as to maintain the temperature of the component part below a maximum value, while keeping the fuel in the incoming fuel supply line substantially constant. The control unit also strives to adjust the operating conditions of the apparatus so that pressure oscillations are kept below a maximum value.

EP 2 442 031 A1 discloses a combustion device control unit and a combustion device, e.g. a gas turbine, which determine on the basis of at least one operating parameter whether the combustion device is in a predefined operating stage. In response hereto, there is generated a control signal configured for setting a ratio of at least two different input fuel flows to a predetermined value for a predetermined time in case the combustion device is in the predefined operating stage. This document discloses the preamble of claim 1.

WO 2011/042037 A1 discloses a combustion apparatus with a control arrangement arranged to vary the fuel supplies to one or more burners based on a temperature information and on a pressure information and on a further information. The further information is indicative for a progress over time for a signal for a time span defined by a time information, such as to maintain the temperature of a desired part to be protected below a predetermined maximum temperature limit and such as to keep the pressure variations within the combustion volume below a predetermined maximum pressure variation limit, while keeping the overall fuel supply in the fuel supply line to the apparatus substantially constant.

However, in the known predictive emissions monitoring systems it is not considered a pilot fuel split fluctuation, drifts in the fuel system or a change in a variable fuel composition.

### Summary of the Invention

It may be an object of the present invention to provide a more reliable predictive emissions monitoring system.

This object is solved by a combustion system for a gas turbine engine and by a method for predicting a pollutant concentration of the combustion system for a gas turbine engine according to the independent claims.

According to a first aspect of the present invention a combustion system for a gas turbine engine is presented. The combustor system comprises a combustion chamber, a fuel control unit, a temperature sensor, a fuel determination unit, a mass flow sensor and a control unit. Into the combustion chamber a pilot fuel and a main fuel is injectable and flammable, wherein an exhaust gas generated by the burned pilot fuel and the burned main fuel is exhaustible out of the combustion chamber.

The fuel control unit divides a fuel in the pilot fuel and the main fuel under consideration of an adjustable pilot fuel/main fuel ratio. The temperature sensor generates a temperature signal indicative of a temperature of the exhaust gas at a location (e.g. the hottest location) inside the combustion chamber or further downstream of the combustion chamber. The fuel determination unit (e.g. a gas chromatograph or calorimeter) determines fuel signal indicative of a composition (e.g. a quality and a constituent component quantity) of the fuel. The mass flow sensor generates a mass flow signal indicative of an air mass flow entering the combustion chamber.

The control unit is coupled to the fuel control unit for adjusting the pilot fuel/main fuel ratio, to the temperature sensor for receiving the temperature signal, to the fuel determination unit for receiving the determined fuel signal of the fuel and to the mass flow sensor for receiving the determined mass flow signal.

The control unit is configured for determining a predicted pollutant (e.g. NOx, Sox, UHC and/or CO) concentration of the exhaust gas on the basis of the temperature signal, the fuel signal, the mass flow signal and the pilot fuel/ main fuel split ratio.

According to a further aspect of the present invention, a method for predicting a pollutant concentration of a combustion system for a gas turbine engine is presented. A fuel is divided in a pilot fuel and a main fuel by a fuel control unit under consideration of an adjustable pilot fuel ratio, wherein the pilot fuel and the main fuel is injectable and flammable inside a combustion chamber of the combustion system. An exhaust gas is generated by the burned pilot fuel and the burned main fuel and is exhaustible out of the combustion chamber.

A temperature signal is generated by a temperature sensor indicative of a temperature of the exhaust gas at a location (e.g. the hottest location) inside the combustion chamber or further downstream of the combustion chamber. A mass flow signal is generated by a mass flow sensor indicative of an air mass flow entering the combustion chamber. A fuel signal of the composition of the fuel is determined by a fuel determination unit.

A predicted pollutant concentration of the exhaust gas is determined by a control unit on the basis of the temperature signal, the fuel signal, the mass flow signal and the fuel split ratio.

The gas turbine engine comprises an upstream rotating compressor coupled to a downstream turbine and the combustor system with at least one combustion chamber in-between. A shaft couples the upstream rotating compressor with the downstream turbine. In some embodiments, a twin shaft design is provided, wherein two shafts are arranged within the gas turbine engine which are coupled e.g. by a gear.

The terms upstream and downstream refer to the flow direction of the airflow and/or working gas flow through the gas turbine engine unless otherwise stated. The terms forward and rearward refer to the general flow direction of gas through the engine. The terms axial, radial and circumferential are made with reference to a rotational axis of the shaft of the gas turbine engine.

A combustion chamber comprises a pre-combustion chamber and a main combustion chamber. The fuel is split with the predefined pilot fuel/main fuel ratio into a pilot fuel mass flow and a main fuel mass flow. The pilot fuel is injected at a pilot burner inside the pre-combustion chamber. The main fuel is injected together with the air through a swirler inside the pre-combustion chamber. The pilot fuel is generally richer fuel for maintaining and controlling a stable flame inside the combustion chamber. The main fuel is generally leaner than the pilot fuel in order to ensure an optimum burning characteristic, i.e. with low emissions, such as NOx.

The fuel control unit, for example a controllable valve, splits the (supply) fuel flow into the main fuel (mass flow) and the pilot fuel (mass flow) dependent on the predetermined pilot fuel/main fuel ratio.

Dependent on the fuel/main fuel ratio (amongst other influences such as e.g. the flame temperature or the fuel quality) each gas turbine engine generates a specific pollutant (e.g. NOx and/or CO) and hence a specific amount of pollutant. Furthermore, dependent on the fuel/main fuel ratio the flame characteristic, i.e. the metal temperature and the stability of the flame, is adjustable.

The temperature sensor measures the temperature of the hot products, i.e. the exhaust gas, inside the combustion chamber. The temperature sensor is for example arranged closed to or at the hottest location inside the combustion chamber or is located further downstream of the combustion chamber. Dependent on the temperature of the flame, i.e. the exhaust gas, (amongst other influences such as e.g. the pilot fuel/main fuel ratio or the fuel quality) each gas turbine engine generates a specific pollutant (e.g. NOx and/or CO).

According to a further exemplary embodiment, the combustion system further comprises a further temperature sensor for generating a further temperature signal indicative of a temperature of a material, in particular metal, in the hottest region at a location inside the combustion chamber. The control unit is configured for determining the predicted pollutant concentration of the exhaust gas on the basis of additionally the further temperature signal.

The metal temperature sensor is for example arranged closed to or at the hottest location inside the combustion chamber, for example at a pilot burner surface of the combustion chamber.

The fuel determination unit determines the composition of a used fuel (i.e. the relevant components of the fuel) and furthermore the amount of each relevant components of the fuel. For example, the fuel determination unit may measure the amount of methane, ethane or other alkanes and/or nitrogen as relevant components of the fuel.

Dependent on the composition of the fuel (amongst other influences such as e.g. the pilot fuel/main fuel ratio or the temperature), each gas turbine engine generates a specific pollutant (e.g. NOx and/or CO). Specifically, domestic (natural) gas from different regions in the word differs in its composition dramatically. For example, the composition (methane or nitrogen percentage) of domestic gas gathered in the USA differs dramatically from the composition of domestic gas gathered in UK, the Netherlands or Germany.

The fuel may be a gaseous fuel or a liquid fuel. The gaseous fuel may be measured by the fuel determination unit continuously during operation of the gas turbine engine. For example, the fuel determination unit comprises a gas chromatograph which may be coupled to the fuel supply line in order to measure the composition of the used gaseous fuel continuously.

Furthermore, if a liquid fuel is used for operating the gas turbine engine, a fuel sample is taken at a time point out of the fuel tank and is analysed. For example, each time when the fuel tank is refilled by a new fuel delivery, a respective fuel sample may be taken and analyzed by the fuel determination unit. The information of the composition of the fuel sample is sent as the fuel signal to the control unit, for example.

The fuel determination unit may measure for example a so-called Wobbe index. The Wobbe Index (WI) is an indicator of the interchangeability of fuel gases such as natural gas, liquefied petroleum gas and town gas and is frequently defined in the specifications of gas supply and transport utilities. The Wobbe Index is used to compare the combustion energy output of different composition fuel gases in an appliance (combustor). If two fuels have identical Wobbe Indices then for given pressure and valve settings the energy output will also be identical.

The fuel determination unit may comprise a calorimeter for measuring the Wobbe Index. The calorimeter analyses the oxygen content in the exhaust gas after combustion and compares the oxygen content with an oxygen content (e.g. in the supplied air injected into the combustion chamber before the fuel is burnt) injected into the combustion chamber.

The mass flow sensor is coupled to an air feeding line. The air which is injected into the combustion chamber is supplied via the air feeding line to the combustion chamber. The supplied air mass flow which is injected into the combustion chamber may be controlled e.g. by a variable guide vane (VGV) installed within the compressor stage of the gas turbine engine. Furthermore, the supplied air mass flow may be controlled by bleeding off the air before the air enters the combustion chamber (so called P2-bleed).

Dependent on the air mass flow (amongst other influences such as e.g. the pilot fuel/main fuel ratio or the temperature), each gas turbine engine generates a specific amount of pollutant (e.g. NOx and/or CO). For example, if a higher air mass flow is injected into the combustion chamber, the main fuel is leaner which causes for example a lower NOx emission. In contrast to this, a lower air mass flow causes for example a higher NOx emission.

The data indicative of the influences of the pilot fuel/main fuel ratio, the temperature, the fuel composition and the air mass flow with respect to the pollutant concentration are gathered during a controlled operation of the respective gas turbine engine. For example, the gas turbine engine is run with a constant pilot fuel/main fuel ratio, a constant temperature and a known fuel composition and the air mass flow is changed in a controlled manner, wherein the change in the pollutant emission is measure. Hence, the influence of the air mass flow with respect to the pollutant emission may be determined. In the same manner, the influence of the pilot fuel/main fuel ratio, the temperature and the fuel composition with respect to the pollutant emission may be determined for each gas turbine engine.

The respective data may be stored in a database which is coupled to the control unit. Hence, during operation of the gas turbine engine, the control unit determines a change e.g. in the pilot fuel/main fuel ratio, the temperature, the fuel composition and/or the air mass flow and may compare the changed data (i.e. the determined values of the parameters) with the respective data and the database, so that an exact prediction of a pollutant emission, such as NOx emissions, is achieved.

Hence, by the approach of the present invention, an exact prediction of the pollutant emission is possible even under consideration of the quality and the quantity of the used fuel. Furthermore, if the gas turbine engine is installed in different regions of the world, where e.g. the fuel quality or the air quality (e.g. air pollution, humidity, air temperature) of the air mass flow differs, a precise pollutant emission prediction is possible without conducting time-consuming test operations.

According to an exemplary embodiment of the present invention, the control unit is further configured for comparing the predicted pollutant concentration with a predetermined threshold value (e.g. a given concentration of pollutant such as NOx or CO). The control unit is further configured for adjusting engine control parameters (e.g. the pilot fuel/main fuel ratio, the supplied air mass flow or the power generation/load of the gas turbine engine), if the predicted pollutant concentration exceeds the predetermined threshold value.

According to an exemplary embodiment of the present invention, the combustor system further comprises a pressure sensor for measuring a pressure signal indicative of a pressure variation inside the combustion chamber. The control unit is further coupled to pressure sensor for receiving the pressure signal. The control unit is configured for determining the predicted pollutant concentration further on the basis of the temperature signal, the fuel signal, the mass flow signal, the pilot fuel/main fuel and the pressure signal. The pressure value and in particular the pressure fluctuation may be dependent on the flame characteristic inside the combustion chamber. Hence dependent on the measured pressure value, a statement of the flame quality and hence the pollutant concentration is given.

According to an exemplary embodiment of the present invention, the combustion system comprises a data storage unit coupled to the control unit. The data storage unit comprises engine characteristic data indicative of a relation between a load of the gas turbine engine and the pilot fuel/main fuel ratio. The control unit is configured for adjusting the pilot fuel/main fuel split ratio under consideration of the predicted pollutant concentration and a predetermined threshold value of the load.

According to an exemplary embodiment of the present invention, the control unit is coupleable (connected) to a load measuring unit for measuring a load signal indicative of a load of the gas turbine engine. The control unit is adapted for using the load signal for determining the predetermined threshold value of the load. In other words, the measured load is the predetermined threshold value which means that by amending the other engine control parameters, the load should be not affected. Furthermore, also the above described threshold value for the pollutant concentration should not be exceeded. Hence, by measuring the load and by setting the measured load as a threshold value, the turbine engine can be controlled in such a way, that the load, e.g. the turbine engine output power is kept constant whilst the pollutant concentration is not exceeded.

According to a further aspect of the present invention, a program element for predicting a pollutant concentration of a combustion system for a gas turbine engine is presented, wherein the program element, when being executed by a data processor (e.g. by a data processor of the above described control unit), is adapted for executing the above described method according to the present invention

As used herein, reference to a computer program is intended to be equivalent to a reference to a program element and/or to a computer readable medium containing instructions for controlling a computer system to coordinate the performance of the above described method.

The computer program may be implemented as computer readable instruction code in any suitable programming language, such as, for example, JAVA, C++, and may be stored on a computer-readable medium (removable disk, volatile or non-volatile memory, embedded memory/processor, etc.). The instruction code is operable to program a computer or any other programmable device to carry out the intended functions. The computer program may be available from a network, such as the World Wide Web, from which it may be downloaded.

The invention may be realized by means of a computer program respectively software. However, the invention may also be realized by means of one or more specific electronic circuits respectively hardware. Furthermore, the invention may also be realized in a hybrid form, i.e. in a combination of software modules and hardware modules.

By the present invention, an accurate prediction of the emissions pollutant based on the actual engine readings and the actual fuel composition is provided, whilst operating reliable with low metal temperatures and low emissions. This may increase and engine operational window for different fuel compositions with an improved predictive capability of emission pollutants. Furthermore, by the present invention, the pollutant emissions are predicted and for example not monitored.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless other notified, in addition to any combination of features belonging to one type of subject matter also any combination between features relating to different subject matters, in particular between features of the apparatus type claims and features of the method type claims is considered as to be disclosed with this application.

### Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.
Fig. 1 shows a schematic view of a combustion system according to an exemplary embodiment of the present invention;
Fig. 2 shows a schematic view of the diagram which shows the relation between a main/pilot split and the load of a gas turbine engine; and
Fig. 3 shows a gas turbine engine according to an exemplary embodiment of the present invention.

### Detailed Description

The illustrations in the drawings are schematic. It is noted that in different figures similar or identical elements are provided with the same reference signs.

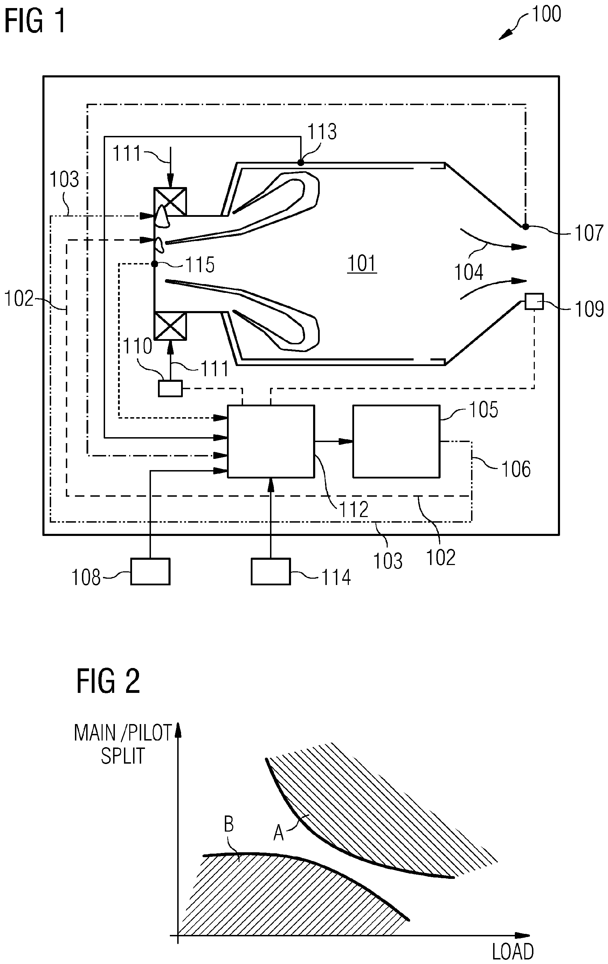

**Fig.1** shows a combustor system 100 for a gas turbine engine 10 according to an exemplary embodiment of the present invention. The combustor system 100 comprises a combustion chamber 101 into which a pilot fuel 102 and a main fuel 103 is injectable and flammable. An exhaust gas 104 generated by the burned pilot fuel 102 and the burned main fuel 103 is exhaustible out of the combustion chamber 101. A fuel control unit 105 divides a fuel 106 in the pilot fuel 102 and the main fuel 103 under consideration of an adjustable pilot fuel/main fuel ratio. A temperature sensor 107 generates a temperature signal indicative of a temperature of the exhaust gas 104 at a location inside the combustion chamber 101. A fuel determination unit 109 determines a fuel signal indicative of a fuel composition of the fuel 106. A mass flow sensor 110 generates a mass flow signal indicative of an air mass flow 111 entering the combustion chamber 101.

A control unit 112 which is coupled to the fuel control unit 105 for adjusting the pilot fuel/main fuel ratio. The control unit 112 is further coupled to the temperature sensor 107 for receiving the temperature signal. The control unit 112 is further coupled to the fuel determination unit 109 for receiving the determined fuel signal of the fuel 106. The control unit 112 is further coupled to the mass flow sensor 110 for receiving the determined mass flow signal.

The control unit 112 is configured for determining a predicted pollutant concentration of the exhaust gas 104 on the basis of the temperature signal, the fuel signal, the mass flow signal and the pilot fuel/main fuel ratio.

The combustion chamber 101 comprises a pre-combustion chamber and a main combustion chamber. The fuel is split with the predefined pilot fuel/main fuel ratio into a pilot fuel mass flow 102 and a main fuel mass flow 103. The pilot fuel 102 is injected at a pilot burner inside the pre-combustion chamber. The main fuel 103 is injected together with the air mass flow 111 through a swirler inside the pre-combustion chamber. The pilot fuel 102 is generally richer fuel for controlling and maintaining a stable flame inside the combustion chamber 101. The main fuel 103 is generally leaner than the pilot fuel in order to generate ensure an optimum proper burning characteristics, i.e. with low emissions, such as NOx.

The fuel control unit 105, for example a controllable valve, splits the (supply) fuel flow into the main fuel (mass flow) 103 and the pilot fuel (mass flow) 102 dependent on the predetermined pilot fuel/main fuel ratio.

Dependent on the fuel/main fuel ratio (amongst other influences such as e.g. the flame temperature or the fuel quality) each gas turbine engine 10 generates a specific pollutant (e.g. NOx and/or CO) and hence a specific amount of pollutant within the exhaust gas 104. Furthermore, dependent on the fuel/main fuel ratio the flame characteristic, i.e. the temperature and the stability of the flame, is adjustable.

The temperature sensor 107 measures the temperature of the hot products, i.e. the exhaust gas 104, from inside the combustion chamber 101. The temperature sensor 107 is for example arranged closed to or at the hottest location inside the combustion chamber 101. Dependent on the temperature of the flame, i.e. the exhaust gas 104, (amongst other influences such as e.g. the pilot fuel/main fuel ratio or the fuel quality) each gas turbine engine 10 generates a specific pollutant (e.g. NOx and/or CO). The temperature sensor 107 may also be located further downstream from the combustion chamber 101, e.g. after a turbine section 18.

The fuel determination unit 109 determines the composition of a used fuel (i.e. the relevant components of the fuel) and furthermore the amount of each relevant components of the fuel. For example, the fuel determination unit may measure the amount of methane, ethane or other alkanes and/or nitrogen as relevant components of the fuel.

Dependent on the composition of the fuel (amongst other influences such as e.g. the pilot fuel/main fuel ratio or the temperature), each gas turbine engine 10 generates a specific pollutant (e.g. NOx and/or CO).

The mass flow sensor 110 is coupled to an air feeding line. The air 111 which is injected into the combustion chamber 101 is supplied via the air feeding line to the combustion chamber 101. There could also be a measurement of the airflow at the compressor inlet, e. g. by a pressure differential correlation that easily translates to a corresponding air flow to the combustion chamber 101. This principle can be compensated for bleed off flows e.g. used for part load operation by including valve characteristics and settings. The supplied air mass flow 111 which is injected into the combustion chamber 101 may be controlled e.g. by a variable guide vane (VGV) installed within the compressor stage of the gas turbine engine 10. Furthermore, the supplied air mass flow 111 may be controlled by bleeding off the air before the air enters the combustion chamber (so called P2-bleed). The air bleed could be to turbine exhaust or to the compressor inlet.

Dependent on the air mass flow 111 (amongst other influences such as e.g. the pilot fuel/main fuel ratio or the temperature), each gas turbine engine 10 generates a specific amount of pollutant (e.g. NOx and/or CO). For example, if a higher air mass flow 111 is injected into the combustion chamber 101, the mixture with the main fuel 103 is leaner which causes for example a lower NOx emission. In contrast to this, a lower air mass flow 111 causes for example a higher NOx emission.

The data indicative of the influences of the pilot fuel/main fuel ratio, the temperature, the fuel composition and the air mass flow with respect to the pollutant concentration are gathered during a controlled operation of the respective gas turbine engine 10.

The respective data may be stored in a database (e.g. a data storage unit 114) which is coupled to the control unit 112. Hence, during operation of the gas turbine engine 10, the control unit 112 determines a change e.g. in the pilot fuel/main fuel ratio, the temperature, the fuel composition and/or the air mass flow 111 and may compare the changed data (i.e. the determined values of the parameters) with the respective data and the database, so that an exact prediction of a pollutant emission, such as NOx emissions, is achieved.

The control unit 112 is further configured for comparing the predicted pollutant concentration with a predetermined threshold value (e.g. a given concentration of pollutant such as NOx or CO). The control unit 112 is further configured for adjusting engine control parameters (e.g. the pilot fuel/main fuel ratio, the supplied air mass flow 111 or the power generation/load of the gas turbine engine), if the predicted pollutant concentration exceeds the predetermined threshold value.

The combustor system 100 further comprises a pressure sensor 113 for measuring a pressure signal indicative of a pressure variation inside the combustion chamber 101. The control unit 112 is further coupled to pressure sensor 113 for receiving the pressure signal. The control unit 112 is configured for determining the predicted pollutant concentration further on the basis of the temperature signal, the fuel signal, the mass flow signal, the pilot fuel/main fuel and the pressure signal. The pressure value and in particular the pressure fluctuation may be dependent on the flame characteristic inside the combustion chamber 101. Hence, dependent on the measured pressure value, a statement of the flame stability and hence the pollutant concentration is given.

The combustion system 100 further comprises the data storage unit 114 coupled to the control unit 112. The data storage unit 114 comprises engine characteristic data indicative of a relation between a load of the gas turbine engine and the pilot fuel/main fuel ratio. The control unit 112 is configured for adjusting the pilot fuel/main fuel split ratio under consideration of the predicted pollutant concentration and a predetermined threshold value of the load.

The control unit is further coupleable (connected) to a load measuring unit 108 for measuring a load signal indicative of a load of the gas turbine engine 10. The control unit 112 is adapted for using the load signal for determining the predetermined threshold value of the load. In other words, the measured load is the predetermined threshold value which means that by amending the other engine control parameters, the load should be not affected. Furthermore, also the above described threshold value for the pollutant concentration should not be exceeded. Hence, by measuring the load and by setting the measured load as a threshold value, the turbine engine 10 can be controlled in such a way, that the load, e.g. the turbine engine output power is kept constant whilst the pollutant concentration is not exceeded.

**Fig. 2** shows a diagram which shows the relation between a main/pilot split (e.g. the pilot fuel/main fuel ratio) and the load of the gas turbine engine 10.

The combustion system 100 comprises the data storage unit 114 coupled to the control unit 112. The data storage unit 114 comprises engine characteristic data indicative of a relation between a load of the gas turbine engine and the pilot fuel/main fuel ratio. The control unit 112 is configured for adjusting the pilot fuel/main fuel split ratio under consideration of the predicted pollutant concentration and a predetermined threshold value of the load.

For example, boundaries of high metal temperature (measured by e.g. a temperature sensor 115, which may be installed at a pilot burner surface of the combustion chamber 101) occur in region A of the diagram in Fig. 2 and high combustor pressure fluctuations occur in region B of the diagram in Fig. 2. Hence, it is an aim to control and adjust the main/pilot split in such a way, that, dependent on the desired loads of the gas turbine engine 10, a region between region A and region B the is headed for. Additionally, by the present invention, the main/pilot split is used for predicting a pollutant emission. The control unit 112 may control the gas turbine engine operation such that the best compromise between a low pollutant emission, an acceptable metal temperature (region A) and an acceptable flame stability inside the combustion chamber 101 (region B) is achieved.

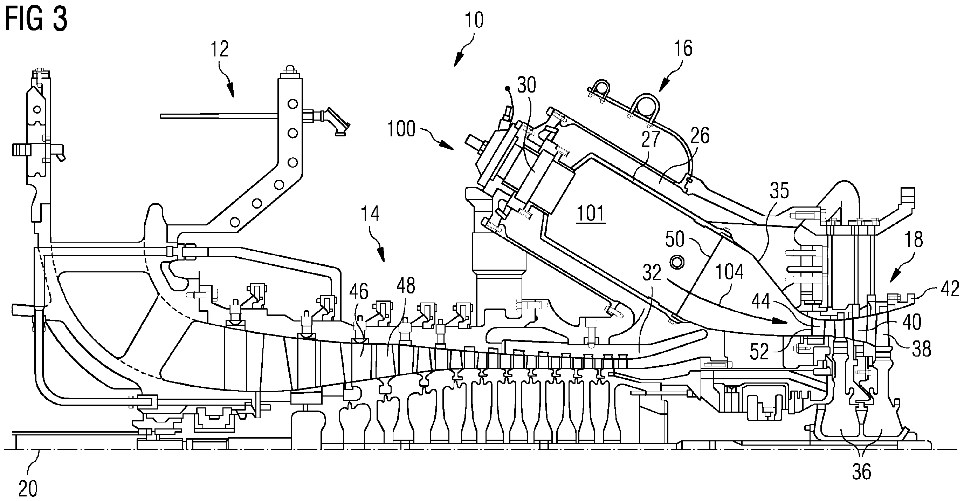

**Fig. 3** shows a gas turbine engine 10 comprising the combustion system 100 as shown in Fig. 1 and Fig. 2.

The gas turbine engine 10 is shown in a sectional view. The gas turbine engine 10 comprises, in flow series, an inlet 12, a compressor section 14, a combustor system 100 and a turbine section 18 which are generally arranged in flow series and generally in the direction of a longitudinal or rotational axis 20. The gas turbine engine 10 further comprises a shaft 22 which is rotatable about the rotational axis 20 and which extends longitudinally through the gas turbine engine 10. The shaft 22 drivingly connects the turbine section 18 to the compressor section 12.

In operation of the gas turbine engine 10, air mass flow 111, which is taken in through the air inlet 12 is compressed by the compressor section 12 and delivered to the combustion system 100 and hence inside the combustion chamber 101. The combustion system 100 comprises one or more combustion chambers 101 defined by a double wall can 27 and at least one burner 30 fixed to each combustion chamber 101 The combustion chambers 101 and the burners 30 are located inside the combustion system 100. The compressed air passing through the compressor 12 enters a diffuser 32 and is discharged from the diffuser 32 into the combustion system 100 from where a portion of the air enters the combustion chamber 101 and is mixed with a gaseous or liquid fuel. The air/fuel mixture is then burned and the exhaust gas 104 or working gas from the combustion is channeled via a transition duct 35 to the turbine section 18.

The turbine section 18 comprises a number of blade carrying discs 36 attached to the shaft 22. In the present example, two discs 36 each carry an annular array of turbine blades 38. However, the number of blade carrying discs could be different, i.e. only one disc or more than two discs. In addition, guiding vanes 40, which are fixed to a stator 42 of the gas turbine engine 10, are disposed between the turbine blades 38. Between the exit of the combustion chamber 100 and the leading turbine blades 38 inlet guiding vanes 44 are provided.

The combustion gas from the combustion chamber 101 enters the turbine section 18 and drives the turbine blades 38 which in turn rotates the shaft 22. The guiding vanes 40, 44 serve to optimise the angle of the combustion or working gas on to the turbine blades 38. The compressor section 12 comprises an axial series of guide vane stages 46 and rotor blade stages 48.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

**List of reference signs**

| | | | |
|---|---|---|---|
| 10 | gas turbine engine | 110 | mass flow sensor |
| 12 | inlet | 111 | air mass flow |
| 14 | compressor section | 112 | control unit |
| 18 | turbine section | 113 | pressure sensor |
| 20 | rotational axis | 114 | data storage unit |
| 30 | burner | 115 | further temperature sensor |
| 32 | diffuser | | |
| 35 | transition duct | | |
| 36 | disc | | |
| 38 | turbine blade | | |
| 40 | guiding vanes | | |
| 42 | stator | | |
| 44 | guiding vanes | | |
| 46 | guide vane stage | | |
| 48 | rotor blade stage | | |
| | | | |
| 100 | combustion system | | |
| 101 | combustion chamber | | |
| 102 | pilot fuel | | |
| 103 | main fuel | | |
| 104 | exhaust gas | | |
| 105 | fuel control unit | | |
| 106 | fuel | | |
| 107 | temperature sensor | | |
| 108 | load measuring unit | | |
| 109 | Wobbe index determination unit | | |

## Claims

1. Combustor system for a gas turbine engine, the combustor system (100) comprising a combustion chamber (101) into which a pilot fuel (102) and a main fuel (103) is injectable and flammable, wherein an exhaust gas (104) generated by the burned pilot fuel (102) and the burned main fuel (103) is exhaustible out of the combustion chamber (101), a fuel control unit (105) which divides a fuel (106) into the pilot fuel (102) and into the main fuel (103) under consideration of an adjustable pilot fuel/main fuel ratio, a temperature sensor (107) for generating a temperature signal indicative of a temperature of the exhaust gas (104) at a location inside the combustion chamber (101) or further downstream of the combustion chamber (101), a control unit (112) which is coupled to the fuel control unit (105) for adjusting the pilot fuel/main fuel ratio, **characterised in that**, the combustor system comprises a fuel determination unit (109) for determining a fuel signal indicative of a fuel composition of the fuel (106), a mass flow sensor (110) for generating a mass flow signal indicative of an air mass flow (111) entering the combustion chamber (101), and the control unit (112) is also coupled to the fuel determination unit (109) for receiving the determined fuel signal of the fuel (106), and to the mass flow sensor (110) for receiving the determined mass flow signal, wherein the control unit (112) is configured for determining a predicted pollutant concentration of the exhaust gas (104) on the basis of the temperature signal, the fuel signal, the mass flow signal and the pilot fuel/main fuel ratio.

2. Combustor system according to claim 1,
wherein the control unit (112) is further configured for comparing the predicted pollutant concentration with a predetermined threshold value,
wherein the control unit (112) is further configured for adjusting an engine control parameter, if the predicted pollutant concentration exceeds the predetermined threshold value.

3. Combustor system according to claim 1 or 2,
wherein the fuel determination unit (109) comprises a gas chromatograph for measuring the fuel composition of the fuel (106) .

4. Combustor system according to one of the claims 1 to 3, further comprising
a pressure sensor (113) for measuring a pressure signal indicative of a pressure variation inside the combustion chamber (101),
wherein the control unit (112) is further coupled to pressure sensor (113) for receiving the pressure signal,
wherein the control unit (112) is configured for determining the predicted pollutant concentration further on the basis of the temperature signal, the fuel signal, the mass flow signal, the pilot fuel/main fuel and the pressure signal.

5. Combustor system according to one of the claims 1 to 4, further comprising
a further temperature sensor (115) for generating a further temperature signal indicative of a temperature of a material, in particular metal, in the hottest region at a location inside the combustion chamber (101),
wherein the control unit (112) is configured for determining a predicted pollutant concentration of the exhaust gas (104) on the basis of additionally the further temperature signal.

6. Combustor system according to one of the claims 1 to 5, further comprising
a data storage unit (114) coupled to the control unit (112),
wherein the data storage unit (114) comprises engine characteristic data indicative of a relation between a load of the gas turbine engine and the pilot fuel/main fuel ratio, wherein the control unit (112) is configured for adjusting the pilot fuel/main fuel split ratio under consideration of the predicted pollutant concentration and a predetermined threshold value of the load.

7. Combustor system according to claim 6,
wherein the control unit (112) is coupleable to a load measuring unit (108) for measuring a load signal indicative of a load of the gas turbine engine,
wherein the control unit (112) is adapted for using the load signal for determining the predetermined threshold value of the load.

8. Method for predicting a pollutant concentration of a combustion system (100) for a gas turbine engine, the method comprising dividing a fuel (106) into a pilot fuel (102) and into a main fuel (103) by a fuel control unit (105) under consideration of an adjustable pilot fuel/main fuel ratio, wherein the pilot fuel (102) and the main fuel (103) is injectable and flammable inside a combustion chamber (101) of the combustion system (100), wherein an exhaust gas (104) is generated by the burned pilot fuel (102) and the burned main fuel (103) and is exhaustible out of the combustion chamber (101), generating a temperature signal by a temperature sensor (107) indicative of a temperature of the exhaust gas (104) at a location inside the combustion chamber (101) or further downstream of the combustion chamber (101), **characterised in that**, the method comprises the steps of generating a mass flow signal by a mass flow sensor (110) indicative of an air mass flow (111) entering the combustion chamber (101), determining a fuel signal indicative of a fuel composition of the fuel (106) by a fuel determination unit (109), and determining a predicted pollutant concentration of the exhaust gas (104) by a control unit (112) on the basis of the temperature signal, the fuel signal, the mass flow signal and the pilot fuel/main fuel split ratio.

9. A program element for predicting a pollutant concentration of a combustion system for a gas turbine engine, wherein the program element, when being executed by a data processor, is adapted for executing the method according to claim 8.

## Patentansprüche

1. Verbrennungskammeranordnung für ein Gasturbinentriebwerk, wobei die Verbrennungskammeranordnung (100) Folgendes umfasst:
eine Verbrennungskammer (101), in die ein Zündbrennstoff (102) und ein Hauptbrennstoff (103) einspritzbar und entzündbar ist,
wobei ein von dem verbrannten Zündbrennstoff (102) und dem verbrannten Hauptbrennstoff (103) erzeugtes Abgas (104) aus der Verbrennungskammer (101) ausgelassen werden kann, eine Brennstoffregeleinheit (105), die einen Brennstoff (106) unter Berücksichtigung eines einstellbaren Zündbrennstoff/ Hauptbrennstoff-Verhältnisses in den Zündbrennstoff (102) und in den Hauptbrennstoff (103) trennt, einen Temperatursensor (107) zum Erzeugen eines Temperatursignals, das eine Temperatur des Abgases (104) an einem Ort innerhalb der Verbrennungskammer (101) oder weiter stromab der Verbrennungskammer (101) anzeigt, eine Regeleinheit (112), die mit der Brennstoffregeleinheit (105) zum Einstellen des Zündbrennstoff/Hauptbrennstoff-Verhältnisses gekoppelt ist,
**dadurch gekennzeichnet, dass** die Verbrennungskammeranordnung eine Brennstoffbestimmungseinheit (109) zum Bestimmen eines Brennstoffsignals, dass eine Brennstoffzusammensetzung des Brennstoffs (106) anzeigt, einen Massenstromsensor (110) zum Erzeugen eines Massenstromsignals, das einen Luftmassenstrom (111), der in die Verbrennungskammer (101) eintritt, anzeigt, und die Regeleinheit (112) auch mit der Brennstoffbestimmungseinheit (109) zum Empfangen des bestimmten Brennstoffsignals des Brennstoffs (106) und mit dem Massenstromsensor (110) zum Empfangen des bestimmten Massenstromsignals gekoppelt ist, wobei die Regeleinheit (112) zum Bestimmen einer vorhergesagten Schadstoffkonzentration des Abgases (104) auf der Grundlage des Temperatursignals, des Brennstoffsignals, des Massenstromsignals und des Zündbrennstoff/ Hauptbrennstoff-Verhältnisses konfiguriert ist.

2. Verbrennungskammeranordnung nach Anspruch 1,
wobei die Regeleinheit (112) ferner konfiguriert ist zum Vergleichen der vorhergesagten Schadstoffkonzentration mit einem vorbestimmten Schwellenwert,
wobei die Regeleinheit (112) ferner konfiguriert ist zum Einstellen eines Triebwerk-Regelparameters, wenn die vorhergesagte Schadstoffkonzentration den vorbestimmten Schwellenwert übersteigt.

3. Verbrennungskammeranordnung nach Anspruch 1 oder 2, wobei die Brennstoffbestimmungseinheit (109) einen Gaschromatographen zum Messen der Brennstoffzusammensetzung des Brennstoffs (106) umfasst.

4. Verbrennungskammeranordnung nach einem der Ansprüche 1 bis 3, ferner umfassend
einen Drucksensor (113) zum Messen eines Drucksignals, das eine Druckänderung innerhalb der Verbrennungskammer (101) anzeigt,
wobei die Regeleinheit (112) ferner mit dem Drucksensor (113) gekoppelt ist zum Empfangen des Drucksignals,
wobei die Regeleinheit (112) konfiguriert ist zum Bestimmen der vorhergesagten Schadstoffkonzentration ferner auf der Grundlage des Temperatursignals, des Brennstoffsignals, des Massenstromsignals, des Zünd-/Hauptbrennstoffs und des Drucksignals.

5. Verbrennungskammeranordnung nach einem der Ansprüche 1 bis 4, ferner umfassend
einen weiteren Temperatursensor (115) zum Erzeugen eines weiteren Temperatursignals, das eine Temperatur eines Materials, insbesondere Metall, im heißesten Bereich an einem Ort innerhalb der Verbrennungskammer (101) anzeigt,
wobei die Regeleinheit (112) zum Bestimmen einer vorhergesagten Schadstoffkonzentration des Abgases (104) auf der Grundlage von zusätzlich dem weiteren Temperatursignal konfiguriert ist.

6. Verbrennungskammeranordnung nach einem der Ansprüche 1 bis 5, ferner umfassend
eine mit der Regeleinheit (112) gekoppelte Datenspeichereinheit (114),
wobei die Datenspeichereinheit (114) Triebwerkskenndaten enthält, die ein Verhältnis zwischen einer Last des Gasturbinentriebwerks und dem Zündbrennstoff/ Hauptbrennstoff-Verhältnis anzeigen,
wobei die Regeleinheit (112) zum Einstellen des Zündbrennstoff/ Hauptbrennstoff-Aufteilungsverhältnisses unter Berücksichtigung der vorhergesagten Schadstoffkonzentration und eines vorbestimmten Schwellenwerts der Last konfiguriert ist.

7. Verbrennungskammeranordnung nach Anspruch 6
wobei die Regeleinheit (112) koppelbar ist mit einer Lastmesseinheit (108) zum Messen eines Lastsignals, das eine Last des Gasturbinentriebwerks anzeigt,
wobei die Regeleinheit (112) dazu eingerichtet ist, das Lastsignal zum Bestimmen des vorbestimmten Schwellenwerts der Last zu verwenden.

8. Verfahren zum Vorhersagen einer Schadstoffkonzentration einer Verbrennungskammeranordnung (100) für ein Gasturbinentriebwerk, wobei das Verfahren Folgendes umfasst:
Trennen eines Brennstoffs (106) in einen Zündbrennstoff (102) und in einen Hauptbrennstoff (103) durch eine Brennstoffregeleinheit (105) unter Berücksichtigung eines einstellbaren Zündbrennstoff/ Hauptbrennstoff-Verhältnisses,
wobei der Zündbrennstoff (102) und der Hauptbrennstoff (103) einspritzbar und innerhalb einer Verbrennungskammer (101) der Verbrennungskammeranordnung (100) entzündbar ist, wobei ein Abgas (104) durch den verbrannten Zündbrennstoff (102) und den verbrannten Hauptbrennstoff (103) erzeugt wird und aus der Verbrennungskammer (101) ausgelassen werden kann, Erzeugen eines Temperatursignals durch einen Temperatursensor (107),
das eine Temperatur des Abgases (104) an einem Ort innerhalb der Verbrennungskammer (101) oder weiter stromab der Verbrennungskammer (101) anzeigt, **dadurch gekennzeichnet, dass** das Verfahren die Schritte des Erzeugens eines Massenstromsignals durch einen Massenstromsensor (110), das einen Luftmassenstrom (111), der in die Verbrennungskammer (101) eintritt, anzeigt, des Bestimmens eines Brennstoffsignals, dass eine Brennstoffzusammensetzung des Brennstoffs (106) anzeigt, durch eine Brennstoffbestimmungseinheit (109) und des Bestimmens einer vorhergesagten Schadstoffkonzentration des Abgases (104) durch eine Regeleinheit (112) auf der Grundlage des Temperatursignals, des Brennstoffsignals, des Massenstromsignals und des Zündbrennstoff/ Hauptbrennstoff-Aufteilungsverhältnisses umfasst.

9. Programmelement zum Vorhersagen einer Schadstoffkonzentration einer Verbrennungskammeranordnung für ein Gasturbinentriebwerk, wobei das Programmelement, wenn es durch eine Datenverarbeitungseinrichtung ausgeführt wird, zum Ausführen des Verfahrens nach Anspruch 8 ausgelegt ist.

## Revendications

1. Système formant dispositif de combustion pour moteur à turbine à gaz, le système formant dispositif de combustion (100) comprenant une chambre de combustion (101) dans laquelle un combustible pilote (102) et un combustible principal (103) peuvent être injectés et enflammés, étant entendu qu'un gaz d'échappement (104) produit par le combustible pilote (102) brûlé et par le combustible principal (103) brûlé peut s'échapper de la chambre de combustion (101), une unité (105) de régulation de combustible qui divise un combustible (106) en combustible pilote (102) et en combustible principal (103) en prenant en considération un rapport combustible pilote/combustible principal ajustable, un capteur (107) de température pour produire un signal de température indicatif d'une température du gaz d'échappement (104) en un endroit à l'intérieur de la chambre de combustion (101) ou plus loin en aval de la chambre de combustion (101), une unité de commande (112) qui est couplée à l'unité (105) de régulation de combustible en vue d'ajuster le rapport combustible pilote/combustible principal, **caractérisé en ce que** le système formant dispositif de combustion comprend une unité (109) de détermination de combustible servant à déterminer un signal de combustible indicatif d'une composition combustible du combustible (106), un capteur (110) de débit massique servant à produire un signal de débit massique indicatif d'un débit massique (111) d'air entrant dans la chambre de combustion (101), et **en ce que** l'unité de commande (112) est aussi couplée à l'unité (109) de détermination de combustible pour recevoir le signal de combustible déterminé du combustible (106) et au capteur (110) de débit massique pour recevoir le signal de débit massique déterminé, étant entendu que l'unité de commande (112) est configurée en vue de déterminer une concentration prédite de polluant dans le gaz d'échappement (104) sur la base du signal de température, du signal de combustible, du signal de débit massique et du rapport combustible pilote/combustible principal.

2. Système formant dispositif de combustion selon la revendication 1,
étant entendu que l'unité de commande (112) est par ailleurs configurée en vue de comparer la concentration prédite de polluant avec une valeur seuil prédéterminée ;
étant entendu que l'unité de commande (112) est par ailleurs configurée en vue d'ajuster un paramètre de commande moteur si la concentration prédite de polluant dépasse la valeur seuil prédéterminée.

3. Système formant dispositif de combustion selon la revendication 1 ou 2,
étant entendu que l'unité (109) de détermination de combustible comprend un chromatographe en phase gazeuse servant à mesurer la composition combustible du combustible (106) .

4. Système formant dispositif de combustion selon l'une des revendications 1 à 3, comprenant par ailleurs :
un capteur de pression (113) pour mesurer un signal de pression indicatif d'une variation de pression à l'intérieur de la chambre de combustion (101),
étant entendu que l'unité de commande (112) est par ailleurs couplée au capteur de pression (113) en vue de recevoir le signal de pression ;
étant entendu que l'unité de commande (112) est configurée en vue de déterminer la concentration prédite de polluant sur la base par ailleurs du signal de température, du signal de combustible, du signal de débit massique, du combustible pilote/combustible principal et du signal de pression.

5. Système formant dispositif de combustion selon l'une des revendications 1 à 4, comprenant par ailleurs :
un autre capteur de température (115) pour produire un autre signal de température indicatif d'une température d'un matériau, en particulier du métal, dans la zone la plus chaude d'un endroit à l'intérieur de la chambre de combustion (101), étant entendu que l'unité de commande (112) est configurée en vue de déterminer une concentration prédite de polluant dans le gaz d'échappement (104) en se basant en plus sur l'autre signal de température.

6. Système formant dispositif de combustion selon l'une des revendications 1 à 5, comprenant par ailleurs :
une unité (114) de stockage de données couplée à l'unité de commande (112),
étant entendu que l'unité (114) de stockage de données comprend des données sur les caractéristiques du moteur indicatives d'une relation entre une charge du moteur à turbine à gaz et le rapport combustible pilote/combustible principal, l'unité de commande (112) étant configurée en vue d'ajuster le rapport de division combustible pilote/ combustible principal en prenant en considération la concentration prédite de polluant et une valeur seuil prédéterminée de la charge.

7. Système formant dispositif de combustion selon la revendication 6,
étant entendu que l'unité de commande (112) peut être couplée à une unité (108) de mesure de charge servant à mesurer un signal de charge indicatif d'une charge du moteur à turbine à gaz ;
étant entendu que l'unité de commande (112) est adaptée en vue d'utiliser le signal de charge pour déterminer la valeur seuil prédéterminée de la charge.

8. Procédé de prédiction d'une concentration de polluant dans un système de combustion (100) pour moteur à turbine à gaz, le procédé consistant à faire diviser un combustible (106) en un combustible pilote (102) et en un combustible principal (103) par une unité (105) de régulation de combustible en prenant en considération un rapport combustible pilote/combustible principal ajustable, étant entendu que le combustible pilote (102) et le combustible principal (103) peuvent être injectés et enflammés à l'intérieur d'une chambre de combustion (101) du système de combustion (100), étant entendu qu'un gaz d'échappement (104) est produit par le combustible pilote (102) brûlé et par le combustible principal (103) brûlé et qu'il peut s'échapper de la chambre de combustion (101), à faire produire par un capteur de température (107) un signal de température indicatif d'une température du gaz d'échappement (104) en un endroit à l'intérieur de la chambre de combustion (101) ou plus loin en aval de la chambre de combustion (101), **caractérisé en ce que** le procédé comprend les étapes consistant à faire produire par un capteur (110) de débit massique un signal de débit massique indicatif d'un débit massique (111) d'air entrant dans la chambre de combustion (101), à faire déterminer par une unité (109) de détermination de combustible un signal de combustible indicatif d'une composition combustible du combustible (106), et à faire déterminer par une unité de commande (112) une concentration prédite de polluant dans le gaz d'échappement (104) sur la base du signal de température, du signal de combustible, du signal de débit massique et du rapport de division combustible pilote/combustible principal.

9. Élément de programme servant à prédire une concentration de polluant dans un système de combustion pour moteur à turbine à gaz, étant entendu que l'élément de programme, quand il est exécuté par un processeur de données, est adapté en vue d'exécuter le procédé selon la revendication 8.
